# EUROPEAN PATENT APPLICATION

(11) **EP 1 935 683 A1**
(43) Date of publication of application: **25.06.2008**
(21) Application number: 06077296.9
(22) Date of filing: 21.12.2006
(51) Int. Cl.: B60H 1/02, F01K 23/06, F02G 5/00, F25B 27/02

(54) **Expansion circuit**

(71) Applicant: Nederlandse Organisatie voor Toegepast-Natuurwetenschappelijk Onderzoek TNO, 2628 VK Delft (NL)
(72) Inventor: Foster, Darren Leigh, 2803 DK Gouda (NL)
(74) Representative: van Loon, C.J.J.

(57) **Abstract**

The invention relates to an expansion circuit (7) comprising a working medium and a decompression unit (3) for converting thermal energy of a combustion engine (10) into electrical energy by expanding the working medium.

The decompression unit (3) is part of an air-conditioning circuit (2) as a compressor for compressing a working medium. Therefore, the decompression unit (3) can be used both as a generator, driven by the expanding working medium for generating electrical energy in the expansion circuit (7), and, as a compressor, driven electrically, for the compression of a working medium in the air-conditioning circuit (2).

Using the compressor of the air-coditioning system (2) as a decompressor unit (3) in the expansion circuit (7), and as a compressor in the air conditioning system (2) is less costly compared to providing both a decompression unit (3) and a compressor.

## Description

### TECHNICAL FIELD AND BACKGROUND ART

The invention relates to an expansion circuit comprising a working medium and a decompression unit for converting thermal energy of a combustion engine into electrical energy by expanding the working medium. The invention further relates to a vehicle with a combustion motor comprising such a circuit, a decompression unit for use in such a circuit, and a method for converting thermal energy into electrical energy.

For example from United States patent publication 2005229595 an expansion circuit for converting thermal energy of a combustion engine into electrical energy is known.

Expansion circuits are used in combination with combustion enigines for enhancing the fuel efficinecy. In a combustion engine a relativly large part of the fuel energy is transfromed into thermal energy instead of mechanical energy. Expansion circuits convert the thermal energy from for example heated exhaust gasses and enigine cooling fluids into mechanic or electric energy, thus minimizing energy loss and optimizing fuel efficency. However, a problem of expansion circuits is that they are bulky, and costly.

### SUMMARY OF THE INVENTION

It is an object of the invention to provide an expansion circuit, which at least solves part of these problems. Therefore the invention provides an expansion circuit according to claim 1. The invention further provides a vehicle with a combustion engine according to claim 10, a decompression unit according to claim 9, and a method for converting thermal energy into electrical energy according to claim 12.

An expansion circuit according to the invention is characterized in that that the decompression unit is part of an air-conditioning circuit as a compressor for compressing a working medium. The decompression unit can be used both as a generator, driven by the expanding working medium for generating electrical energy in the expansion circuit, and, as a compressor, driven electrically, for the compression of a working medium in the air-conditioning circuit. Within this context, an air conditioning circuit should be comprehended as a circuit comprising a compressor, a condenser an expansion valve and an evaporator.

Using the compressor of the air-coditioning circuit as a decompressor unit in the expansion circuit, and as a compressor in the air conditioning system, is less costly compared to providing both a decompression unit and a compressor. Also, the expansion circuit and the air-conditioning circuit can be partially integrataed, which is much more efficient in space consumption compared to having a separate expansion circuit and air-conditioning circuit.

Specific embodiments of the invention are set forth in the dependent claims.

Further aspects, effects and details of the invention are set forth in the detailed description with reference to examples of which some are shown in the schematic drawings.

### BRIEF DESCRIPTION OF THE DRAWINGS

Fig. 1 schematically shows an example of an embodiment of an expansion circuit according to the invention in combination with an air-conditioning circuit;
Fig. 2 schematically shows the expansion circuit of Fig. 1 with the air-conditioning circuit highlighted; and,
Fig. 3 schematically shows the expansion circuit of Fig. 1 with the expansion circuit highlighted.

### MODES FOR CARRYING OUT THE INVENTION

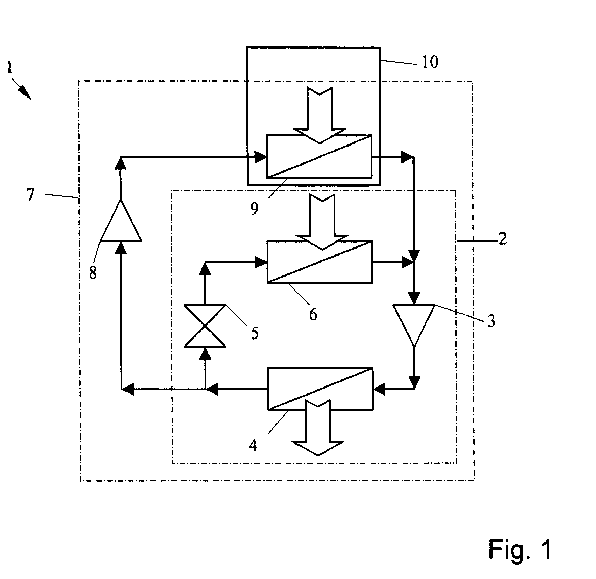

Fig. 1 shows an enlarged expansion circuit 1 comprising an expansion circuit 7 according to the invention combined with an air-conditioning circuit 2. The circuits are connected for using a working medium in both the expansion circuit 7 and the air-conditioning circuit 2. Preferably a common working medium is used for both circuits, and switching valves (not shown) are used for circulating the working medium either within the expansion circuit 7, or within the air-conditioning circuit 2.

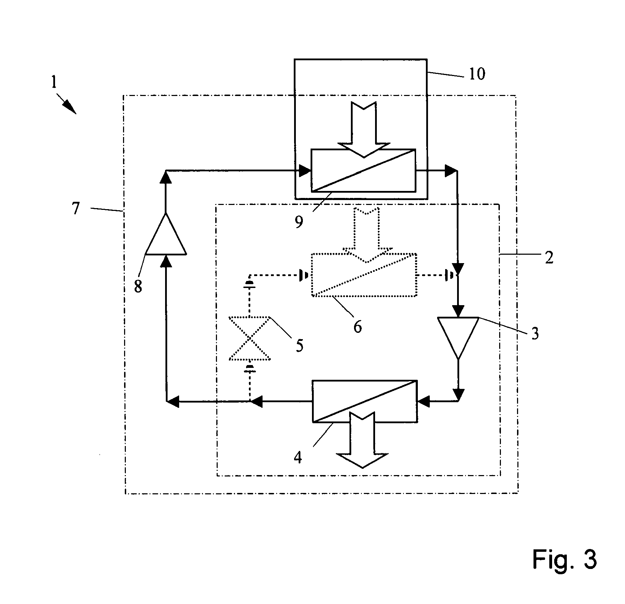

The expansion circuit 7, highlighted in Fig. 3, comprises a pump 8 for circulating the working medium in the direction indicated by the arrows. The expansion circuit 7 further comprises a condenser 4 for condensing the working medium, a heat exchanger 9 for evaporating the working medium, and a decompression unit 3 for generating electrical energy by expanding the working medium. The heat exchanger 9 is part of a cooling system of a combustion engine 10 for using the heat of the engine 10 for evaporating the working medium. An expansion circuit 7 according to the invention is well suited for limiting energy losses of combustion engines, preferably of hybrid vehicles.

The expansion circuit 7 is, by using a Rankine cycle, capable of transforming thermal energy into mechanical energy. Power is generated by alternately vaporizing and condensing a working medium in a closed circuit. There are four processes in the Rankine cycle, each changing the state of the working fluid, which will be set out below.

The working medium, for example a normal refrigerant, e.g. R134a, is cooled in the condenser 4 by heat exchange with ambient air.

Subsequently, the working medium is brought up to high pressure by the circulation pump 8, which also circulates the medium through the circuit 7 in the direction indicated by the arrows.

The pressurized working medium is then heated and evaporated in the heat exchanger 9 at constant pressure. For example, the heat exchanger 9 can be used for converting the thermal energy of an engine coolant to the working medium by placing the exchanger 9 in an engine coolant circuit. The engine coolant circumfluences the heat exchanger 9 and the thermal energy from the coolant is transferred to the working medium in the expansion circuit 7. Therefore, the temperature of the working medium at this stage is preferably lower than the temperature of the engine coolant, which is typically 75 degrees Celsius when entering the engine 10, and 90 degrees Celsius leaving the engine 10, depending on operating conditions. When there is a large temperature difference between the working medium and the cooling medium, a relatively small heat exchanger may be used.

Next, the evaporated, high pressure working medium is expanded across the decompression unit 3. The expansion of the working medium drives the decompression unit 3, converting the energy of the working medium into mechanical energy, which can be used for generating electrical energy.

The expanded working medium is then cooled again in the condenser 4, closing the Rankine cycle.

As an alternative to transferring heat from the engine coolant to the working medium, the working medium may also be used directly as an engine coolant. This eliminates the heat exchanger 9 and allows for more precise temperature control of the engine 10 and increased efficiency.

Furthermore, the working medium can be used for cooling other heat sources, possibly via direct cooling with R234a, such as components of a vehicle, e.g. electrical components of a hybrid engine or a braking system. Also, the working medium may for example be guided through a heat exchanger incorporated within an exhaust system of the combustion engine 10. The heat exchanger may for example be integrated within the expansion circuit 7 in addition to the heat exchanger 9, and between the heat exchanger 9 and the decompression unit 3 for further heating the working medium prior to entering decompression unit 3. The working medium may also be heated prior to entering the heat exchanger 9, for example by guiding the working medium via a gear change box, or via an additional heat exchanger between a turbo and an intercooler of the engine 10.

The electrical energy recovered by the expansion circuit 7 can be stored in a battery for reuse, or can be used directly. In a hybrid vehicle the energy can be used, for example, for supplementing regenerative braking energy. Thus, recuperating energy that would otherwise be dissipated for, for example, driving the vehicle or providing the on-board circuits with energy, and increasing the energy efficiency of the vehicle.

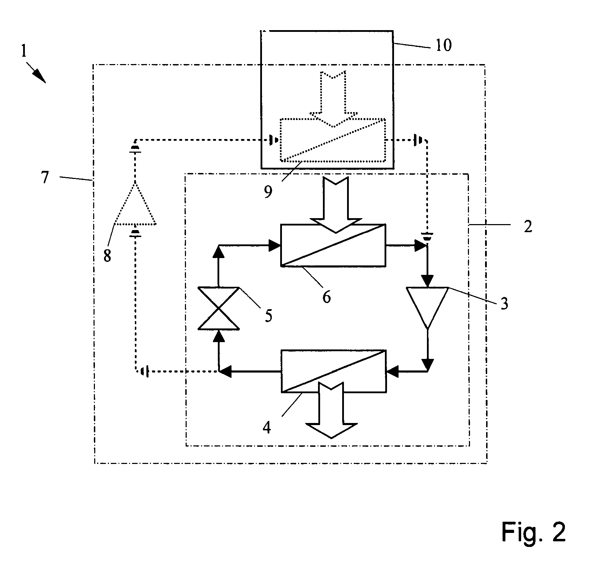

The air-conditioning circuit 2, highlighted in Fig. 2, is partially integrated with the expansion circuit 7. It shares the decompression unit 3 for functioning as a compressor, and the condenser 4 for cooling the working medium, with the expansion circuit 7. The air-conditioning circuit 2 further comprises an expansion valve 5 for expanding the working medium, and an evaporator 6 for evaporating the working medium.

The working medium circulates through the air-conditioning circuit in the direction indicated by the arrows. In the condenser 4, the working medium is liquefied, i.e. cooled in a heat exchanger, for example, from a temperature of 60 degrees Celsius to a temperature of 40 degrees Celsius, by ambient air,

The liquefied medium is then expanded in a valve 5, and transported to the evaporator 6, which in an alternative embodiment may be incorporated in, or integrated with the expansion valve 5. In the evaporator the working medium is evaporated by heat exchange with ambient air. The cooled ambient air can subsequently be used for, for example, cooling a passenger cabin of a vehicle.

After passing through the evaporator 6, the evaporated working medium is compressed by the decompression unit 3, which, when used as a compressor, is preferably electrically driven.

The expansion system 1 may comprise a control system for designating the function of the decompression unit 3 as part of the expansion circuit 7 as a decompressor or as part of the air conditioning circuit 2 as a compressor. The control system preferably designates priority to using the decompression unit 3 as a compressor in air-conditioning circuit 2, and only uses the decompression unit for recuperating electric energy from engine heat when the temperature of the engine coolant reaches a certain critical level.

For example, when the temperature of the engine coolant reaches a critical temperature, e.g. the operating temperature, the function of the decompression unit 3 is switched from compressor unit to decompression unit and the expansion circuit 7 is used for cooling the engine 10 and/or the engine coolant. When the temperature of the engine coolant is below the operating temperature, for example when the engine 10 has been switched off or after extensive cooling, the decompression unit 3 may be used again as a compressor for compressing the working medium for the air-conditioning circuit 2.

Alternatively the expansion circuit 7 may be used for recuperating energy whenever the air-conditioning circuit 2 is switched off. In a preferred embodiment, the air-conditioning circuit 2 cools a volume of air, for example the air in a passenger cabin of a vehicle, via an iterative process, alternating periods of cooling small volumes of air with periods of measuring the temperature change of air in the passenger cabin. During the periods the temperature is measured, the function of the decompression unit 3 can be switched from compressor to decompressor for recuperating energy. Thus, the air-conditioning circuit 2 and the decompression circuit 7 can be used alternately.

The control system preferably monitors the engine coolant temperature and the ambient air temperature, which give the available energy for regeneration. Based on this input the speed of the compressor 3 and the pump 8 may be controlled. The control system may further control a thermostat, pump and fan in the engine coolant circuit, for controlling the temperature of the engine coolant.

A decompression unit 3 according to the invention is especially suited for use in a vehicle with a combustion motor. The efficiency of such combustion engines is relatively low because much fuel energy is transformed into heat. The energy lost via the engine coolant and exhaust losses can be of the same magnitude as the delivered engine power at that time. As a rule of thumb, an engine delivering 10kW dissipates 10kW via the coolant, and emits 10kW into the atmosphere via the axhaust. Thus up to two thirds of the fuel energy may be converted into thermal energy.

Preferably an expansion circuit 7 according to the invention is used with a vehicle driven by a hybrid engine. Hybrid engines do not need cooling during electric driving and during stop phases, when the combustion engine 10 is switched off. Thus the decompression unit can be used as a decompressor for generating energy within the decompression circuit 7 while the combustion engine 10 is running, and as a compressor for compressing a working medium within the air-conditioning circuit 2 when the combustion engine 10 is switched off.

For generating electrical energy the decompression unit 3 is driven by the expansion of the heated and compressed working medium circulated within the decompression circuit 7. The decompression unit 3 is also part of the air-conditioning circuit 2 as a compressor. For use as a compressor, the decompression unit is preferably electrically driven. The decompression unit 3 can for example be a conventional, electrically driven compressor, thus the electromotor of the compressor can be used for generating electrical energy.

Because the decompression unit 3 is part of both the air-conditioning circuit 2 and the expansion circuit 7, no separate decompression unit and compressor are needed. This saves space, for example in the limited space of the engine compartment under the hood of a car.

Also, only one unit has to be installed, which is efficiently used. Therefore an expansion circuit 7 according to the invention is relatively inexpensive.

It should be noted that the above-described embodiments illustrate rather than limit the invention, and various alternatives are possible without departing from the scope of the appended claims. For example, the expansion circuit and the air-conditioning circuit may or may not share a condenser for cooling the working medium.

It should also be noted those skilled in the art will be able to design alternatives without departing from the scope of the appended claims. In the claims, any reference signs placed between parentheses shall not be construed as limiting the claim. The word 'a' is used as equivalent to the term 'at least one'. The mere fact that certain measures are recited in mutually different claims does not indicate that a combination of these measures cannot be used to advantage.

## Claims

**1.** An expansion circuit (7) comprising a working medium and a decompression unit (3) for converting thermal energy of a combustion engine (10) into electrical energy by expanding the working medium, **characterized in that** the decompression unit (3) is part of an air-conditioning circuit (2) as a compressor for compressing a working medium.

**2.** An expansion circuit according to claim 1, wherein the expansion circuit (7) and the air conditioning circuit (2) are connected for using a working medium common to both the expansion circuit (7) and the air-conditioning circuit (2).

**3.** An expansion circuit according to claim 1 or 2, further comprising a condenser (4), which is also, part of the air-conditioning circuit (2).

**4.** An expansion circuit according to any one of the preceding claims, further comprising a heat exchanger (9) for collecting thermal energy from the cooling circuit of the engine (10).

**5.** An expansion circuit according to claims 1-3, wherein the expansion circuit (7) is connected to a cooling circuit of the engine (10) for using a working medium in both the expansion circuit (7) and the cooling circuit of the engine (10).

**6.** An expansion circuit according to any one of the preceding claims, wherein the expansion circuit (7) is connected to the cooling circuit of a braking system for using a working medium in both the expansion circuit (7) and the cooling circuit of the braking system.

**7.** An expansion circuit according to any one of the preceding claims, wherein the expansion circuit (7) is connected to a gear change box for using a working medium in both the expansion circuit (7) and the gear change box for cooling the gear change mechanism.

**7.** An expansion circuit according to any one of the preceding claims, further comprising a heat exchanger for collecting thermal energy from the exhaust system of the engine (10).

**8.** An expansion circuit according to any one of the preceding claims, wherein the function of the decompression unit (3) as part of the expansion circuit (7) as a decompressor or as part of the air conditioning circuit (2) as a compressor is designated by a control system.

**9.** A motor vehicle comprising a combustion engine with an expansion circuit (7) according to any one of the preceding claims.

**10.** Decompression unit (3) for use in an expansion circuit (7) according to any one of the claims 1-8.

**11.** Use of a decompression unit (3) as a compressor in an air-conditioning circuit (2).

**12.** A method for converting thermal energy into electrical energy using an expansion circuit (7), said method comprising warming a working medium and expanding said working medium in a decompression unit (3) **characterized in that** the decompression unit (3) is also used for compressing a working medium in an air-conditioning circuit (2).
